(19) **Europäisches Patentamt**

**European Patent Office**

**Office européen des brevets**

(11) **EP 0 612 915 B1**

(12) **EUROPÄISCHE PATENTSCHRIFT**

(45) Veröffentlichungstag und Bekanntmachung des Hinweises auf die Patenterteilung:
**18.12.1996 Patentblatt 1996/51**

(51) Int Cl.⁶: **F02B 75/06**, F16F 15/30

(21) Anmeldenummer: **94101962.2**

(22) Anmeldetag: **09.02.1994**

(54) **Hubkolbenmotor**

Reciprocating piston engine

Moteur à piston alternatif

(84) Benannte Vertragsstaaten:
**DE FR GB**

(30) Priorität: **20.02.1993 DE 4305306**

(43) Veröffentlichungstag der Anmeldung:
**31.08.1994 Patentblatt 1994/35**

(73) Patentinhaber: **ADAM OPEL AG**
**65423 Rüsselsheim (DE)**

(72) Erfinder:
• **Tholl, Manfred, Ing. (grad.)**
**D-55129 Mainz (DE)**
• **Grebe, Uwe Dieter, Dipl.-Ing.**
**D-65468 Trebur (DE)**

(74) Vertreter: **Kümpfel, Heinz, Dipl.-Ing. et al**
**Adam Opel AG,**
**Patentwesen**
**65423 Rüsselsheim (DE)**

(56) Entgegenhaltungen:
EP-A- 0 323 618    FR-A- 2 293 590
FR-A- 2 455 176    FR-A- 2 489 890
US-A- 4 262 552    US-A- 5 007 303

• PATENT ABSTRACTS OF JAPAN vol. 10, no. 51 (M-457) 28. Februar 1986 & JP-A-60 201 138 (NISSAN JIDOSHA KK) 11. Oktober 1985
• PATENT ABSTRACTS OF JAPAN vol. 16, no. 57 (M-1210) 13. Februar 1992 & JP-A-03 255 242 (MARUYAMA MFG CO LTD) 14. November 1991
• PATENT ABSTRACTS OF JAPAN vol. 17, no. 41 (M-1359) 26. Januar 1993 & JP-A-04 258 552 (TOYOTA AUTOM LOOM WORKS LTD) 14. September 1992
• PATENT ABSTRACTS OF JAPAN vol. 12, no. 416 (M-759) 4. November 1988 & JP-A-63 152 746 (MAZDA MOTOR CORP) 25. Juni 1988
• PATENT ABSTRACTS OF JAPAN vol. 16, no. 195 (M-1246) 12. Mai 1992 & JP-A-04 029 643 (NISSAN MOTOR CO LTD) 31. Januar 1992
• PATENT ABSTRACTS OF JAPAN vol. 7, no. 120 (M-217) 25. Mai 1983 & JP-A-58 038 369 (NISSAN JIDOSHA KK) 5. März 1983
• DATABASE WPI Week 8245, Derwent Publications Ltd., London, GB; AN 82-7972 & SU-A-893 637 (BELORUSSIAN POLY) 30. Dezember 1981

## Beschreibung

Die Erfindung betrifft einen Hubkolbenmotor nach dem Oberbegriff des Patentanspruches.

Hubkolbenmotoren, insbesondere solche mit geringer Zylinderzahl, haben infolge der nacheinander verlaufenden Arbeitsspiele der Kolben eine ungleichförmige Drehmomentenabgabe. Dieser Ungleichförmigkeitsgrad kann bekanntlich mit wachsendem Massenträgheitsmoment des Kurbeltriebes reduziert werden. So ist es bei Hubkolbenmotoren üblich und auch notwendig, die Kurbelwelle unmittelbar mit einer Schwungmasse zu verbinden. Die Erhöhung des Massenträgheitsmomentes hat jedoch ungünstigen Einfluß auf das dynamische Verhalten der Maschine, da bei Drehzahländerungen Arbeit verrichtet werden muß, um den Bewegungszustand der Drehmasse zu ändern. Die bei gleichem Einsatz an Drehmoment erreichbare Winkelbeschleunigung des Kurbeltriebes ist umgekehrt proportional zu dessen Massenträgheit. Die Forderung nach hoher Motordynamik und hohem Ausgleichsgrad sind somit kontradiktionär. Die Auslegung eines konventionellen Hubkolbenmotors weist somit bei der Bemessung der Schwungmassen einen Kompromißcharakter auf.

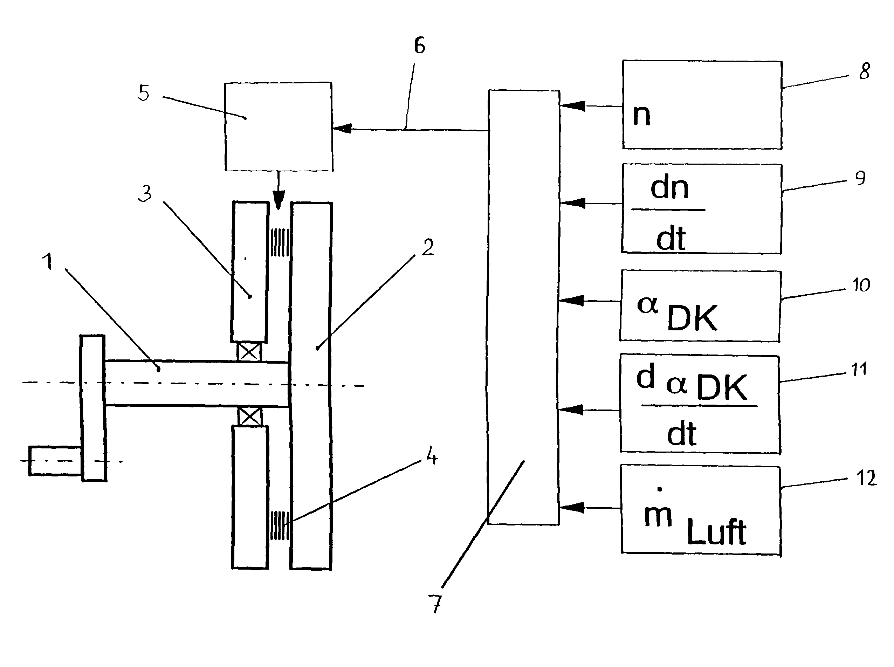

Mit US 5 007 303 ist eine Schwungscheibe für einen Hubkolbenmotor beschrieben, die sich aus zwei Massen zusammensetzt, welche über eine Magnetkupplung in Abhängigkeit von Motorparametern verbunden oder getrennt werden können. Die Zeichnung zeigt diesen Stand der Technik in einer schematisierten Form.

Eine Kurbelwelle 1 eines Hubkolbenmotors ist drehfest verbunden mit einer Schwungscheibe 2. Auf der Kurbelwelle 1 ist nahe der Schwungscheibe 2 ein zusätzliches Schwungrad 3 drehbar gelagert. Die Schwungscheibe 2 sowie das Schwungrad 3 sind vermittels einer zwischen ihnen wirkenden reibschlüssigen Kupplung 4 verbindbar. Die Kupplung 4 ist so ausgelegt, daß der Reibschluß weich einsetzt. Die Kupplung 4 wird betätigt von einem Aktuator 5, der als hydraulischer oder elektrischer Servomotor ausgelegt sein kann. Der Aktuator 5 wird angesteuert durch ein Signal 6, welches eine Regeleinrichtung 7 generiert, die über Sensoren 8, 9, 10, 11, 12 als Input die Drehzahl n des Hubkolbenmotors, die Änderung der Motordrehzahl $\frac{dn}{dt}$, die Lastvorgabe für den Hubkolbenmotor z. B. in Form des Öffnungswinkels der Drosselklappe $\alpha_{DK}$, die Änderung der Lastvorgabe für den Hubkolbenmotor $\frac{d_{\alpha DK}}{dt}$ sowie den tatsächlichen Lastzustand, z. B. in Form einer dem Luftdurchsatz $\dot{m}_{Luft}$ des Hubkolbenmotors proportionalen Größe erhält und miteinander verbindet.

Beim Starten des Hubkolbenmotors ist das zusätzliche Schwungrad 3 von der Schwungscheibe 2 abgekoppelt. Damit muß der Startermotor das zusätzliche Schwungrad 3 nicht mitbeschleunigen, d. h. die erforderliche Starterleistung ist geringer. Beim Stationärbetrieb, also bei einem Betrieb des Hubkolbenmotors mit annähernd gleichbleibender Drehzahl n, ist das zusätzliche Schwungrad 3 je nach Motordrehzahl an die Schwungscheibe 2 angekoppelt, und zwar bei niedriger Drehzahl n angekuppelt, um somit die dabei auftretenden Ungleichförmigkeiten der Winkelgeschwindigkeit an der Kurbelwelle 1 durch die größere Schwungmasse auszugleichen; und bei hoher Drehzahl n abgekuppelt, da dabei die geringere allein vom Kurbeltrieb und der Schwungscheibe 2 gebildete Schwungmasse für einen ausreichenden Ausgleich des Ungleichförmigkeitsgrades ausreicht.

Wird durch den Sensor 9 eine positive Beschleunigung $\frac{dn}{dt}$ des Hubkolbenmotors über einen bestimmten Schwellenwert hinaus festgestellt, so wird die Kupplung 4 gelöst. Der Hubkolbenmotor beschleunigt so mit geringem Massenträgheitsmoment. Ist dieser instationäre Vorgang abgeschlossen, dann wird die Kupplung 4 gesteuert geschlossen, so daß das zusätzliche Schwungrad 3 durch Reibmoment der Kupplung 4 auf die Drehzahl der Kurbelwelle 1 beschleunigt wird. Durch die Wahl eines hohen Schlupfes an der Kupplung 4 ist ein weiches Einkuppeln möglich. Dieser Vorgang wird bei einem Fahrzeugantrieb sinnvoll nach Erreichen einer Sollfahrgeschwindigkeit durchgeführt, da dann die Gesamtmasseträgheit des Fahrzeuges auf das zu beschleunigende Schwungrad 3 zurückwirkt.

Wird durch den Sensor 9 eine negative Beschleunigung $\frac{dn}{dt}$ des Kurbeltriebes erkannt, dann sind z. B. in Abhängigkeit vom Fahrzustand eines Fahrzeuges zwei Schaltungsvarianten möglich. Im ersten Fall bleibt das zusätzliche Schwungrad 3 mit der Kurbelwelle 1 sowie der Schwungscheibe 2 verbunden und die Bewegungsenergie der insgesamt größeren Schwungmasse wird genutzt, um Fahrwiderstände zu überwinden. In einem zweiten Fall, nämlich beim Abbremsen eines Fahrzeuges, wird das Schwungrad 3 vom Kurbeltrieb abgekoppelt. Dadurch erhöht sich die Bremswirkung des Triebwerkes. Die dem mit höherer Drehzahl weiterlaufenden Schwungrad 3 innewohnende Energie kann bei einem folgenden Beschleunigen durch Einkuppeln der Kupplung 4 bis zur Drehzahlangleichung zwischen Schwungrad 3 und Kurbelwelle 1 wieder genutzt werden. Die Auswahl zwischen den beschriebenen zwei Fällen ist durch sinnreiche Verknüpfung der Signale von den Sensoren 8 bis 12 in der Regeleinrichtung 7 leicht möglich.

Damit kann das Massenträgheitsmoment des Kurbeltriebes jedoch nur in kleinen Grenzen variiert werden. Eine feinstufige Anpassung an die Erfordernisse der jeweiligen Betriebssituation ist nicht möglich.

Es ist Aufgabe der Erfindung, einen Hubkolbenmotor dahingehend zu verbessern, daß er auch bei geringer Zylinderzahl im stationären Betrieb und besonders im Bereich niedriger Drehzahlen mit einem hohen Gleichförmigkeitsgrad arbeitet, im instationären Betrieb, d. h. bei Drehzahländerungen, der Kurbeltrieb aber nur geringe Massenträgheit aufweist, wobei das Massenträgheitsmoment der Schwungscheibe in weiten Grenzen variabel und an das jeweilige Erfordernis anpaßbar sein soll.

Diese Aufgabe wird erfindungsgemäß durch die kennzeichnenden Merkmale des ersten Patentanspruches gelöst.

Die vorliegende Erfindung hebt sich somit vom Stand der Technik dadurch ab, daß abhängig vom Fahrzustand eines Kraftfahrzeuges mehrere zusätzliche Schwungräder nacheinander an die Kurbelwelle eines Hubkolbenmotors angekuppelt oder abgekuppelt werden und damit eine eng gestufte Anpassung der wirksamen Schwungmasse an das jeweilige Betriebserfordernis ermöglicht ist.

Die zusätzlichen Schwungräder sind frei drehbar auf der Kurbelwelle gelagert und durch eine schaltbare Kupplung mit der Kurbelwelle drehstarr verbindbar.

Als schaltbare Kupplung eignet sich besonders eine reibschlüssige Kupplung, welche über einen Aktuator betätigt ist.

Der Aktuator der schaltbaren Kupplung ist wirkverbunden mit einer Regeleinrichtung, welche in Abhängigkeit von Betriebsparametern wie Motordrehzahl, Änderung der Motordrehzahl, Lastvorgabe für den Motor, Änderung der Lastvorgabe für den Motor und aktueller Lastzustand ein Signal für den Aktuator zum Schalten der Kupplung generieren.

Es entspricht auch der Erfindung, wenn der Regeleinrichtung neben den vorgenannten Signalen weitere Signale, z. B. das Signal der Fahrgeschwindigkeit eines Fahrzeuges oder das aktuelle Fahrzeuggewicht, zugeführt werden.

**Patentansprüche**

1. Hubkolbenmotor mit einer zur Milderung des Ungleichförmigkeitsgrades der Drehmomentabgabe an der Kurbelwelle des Kurbeltriebes angeordneten Schwungmasse, wobei das Massenträgheitsmoment des Kurbeltriebes minimiert ist auf einen instationären Betrieb, eine zusätzliche Schwungmasse schaltbar mit dem Kurbeltrieb (Kurbelwelle 1, Schwungscheibe 2) verbindbar ist, die zusätzliche Schwungmasse frei drehbar auf der Kurbelwelle (1) gelagert und durch eine schaltbare Kupplung (4) mit der Kurbelwelle (1) verbindbar ist, die schaltbare Kupplung (4) eine reibschlüssige Kupplung ist, die in Abhängigkeit von Signalen von Sensoren zur Erkennung von Motorparametern über einen Aktuator (5) betätigt ist, **dadurch gekennzeichnet**, daß die zusätzliche Schwungmasse aus mehreren mit dem Kurbeltrieb verbindbaren Schwungrädern besteht.

2. Hubkolbenmotor nach Anspruch 1, **dadurch gekennzeichnet**, daß die zusätzlichen Schwungräder (3) frei drehbar auf der Kurbelwelle (1) gelagert und durch eine schaltbare Kupplung (4) mit der Kurbelwelle (1) verbindbar sind.

3. Hubkolbenmotor nach Anspruch 1 und 2, **dadurch gekennzeichnet**, daß die schaltbare Kupplung (4) eine reibschlüssige Kupplung ist, die über einen Aktuator (5) betätigt ist.

4. Hubkolbenmotor nach Anspruch 3, **dadurch gekennzeichnet**, daß der Aktuator (5) der schaltbaren Kupplung (4) wirkverbunden ist mit einer Regeleinrichtung (7), welche in Abhängigkeit von Signalen von Sensoren (8, 9, 10, 11, 12) für Motordrehzahl n, Änderung der Motordrehzahl $\frac{dn}{dt}$ Lastvorgabe für den Motor $\alpha_{DK}$, Änderung der Lastvorgabe $\frac{d_{\alpha DK}}{dt}$ und tatsächlichen Lastzustand $\dot{m}_{Luft}$ ein Signal für den Aktuator (5) zum Schalten der Kupplung (4) generiert.

**Claims**

1. Reciprocating-piston engine with a flywheel mass arranged on the crankshaft of the crank drive to reduce the degree of unevenness of torque output, wherein the moment of inertia of the crank drive is minimised to non-steady operation, an additional flywheel mass can be connected controllably to the crank drive (crankshaft 1, flywheel 2), the additional flywheel mass is mounted freely rotatably on the crankshaft (1) and can be connected to the crankshaft (1) by a clutch (4), the clutch (4) is a friction clutch which is operated via an actuator (5) as a function of signals from sensors for detecting engine parameters, characterised in that the additional flywheel mass consists of several flywheels which can be connected to the crank drive.

2. Reciprocating-piston engine according to claim 1, characterised in that the additional flywheels (3) are mounted freely rotatably on the crankshaft (1) and can be connected to the crankshaft (1) by a clutch (4).

3. Reciprocating-piston engine according to claims 1 and 2, characterised in that the clutch (4) is a friction clutch which is operated via an actuator (5).

4. Reciprocating-piston engine according to claim 3, characterised in that the actuator (5) of the clutch (4) is operatively connected to a regulating device (7) which generates a signal for the actuator (5) for engaging the clutch (4) as a function of signals from sensors (8, 9, 10, 11, 12) for engine speed n, variation in engine speed $\frac{dn}{dt}$ load standard for the engine $\alpha_{DK}$, variation in load standard $\frac{d_{\alpha DK}}{dt}$ and actual load state $\dot{m}_{air}$.

**Revendications**

1. Moteur à pistons alternatifs avec, pour atténuer le degré d'irrégularité du couple fourni, une masse d'inertie disposée sur le vilebrequin du mécanisme d'embiellage, le moment d'inertie dû aux masses étant minimisé pendant le fonctionnement instationnaire, une masse d'inertie additionnelle pouvant être couplée au mécanisme d'embiellage (vilebrequin 1, volant d'inertie 2), la masse d'inertie additionnelle étant montée libre en rotation sur le vilebrequin (1) et pouvant être couplée au vilebrequin (1) par un accouplement (4) embrayable, l'accouplement (4) embrayable étant un accouplement à friction commandé par un actionneur (5) en fonction de signaux de capteurs de détection de paramètres moteur, caractérisé par le fait que la masse d'inertie additionnelle se compose de plusieurs volants d'inertie qui peuvent être couplés au mécanisme d'embiellage.

2. Moteur à pistons alternatifs selon la revendication 1, caractérisé par le fait que les volants d'inertie (3) additionnels sont montés libres en rotation sur le vilebrequin (1) et peuvent être couplés au vilebrequin (1) par un accouplement (4) embrayable.

3. Moteur à pistons alternatifs selon la revendication 1 ou 2, caractérisé par le fait que l'accouplement (4) embrayable est un accouplement à friction qui est actionné par l'intermédiaire d'un actionneur (5).

4. Moteur à pistons alternatifs selon la revendication 3, caractérisé par le fait que 1' actionneur (5) de l'accouplement (4) embrayable est relié activement à un dispositif de régulation (7) qui, en fonction de signaux de capteurs (8, 9, 10, 11, 12) pour la vitesse de rotation n du moteur, la variation dn/dt de la vitesse de rotation du moteur, la charge affichée $\alpha_{DK}$ du moteur, la variation $\alpha_{DK}$/dt de la charge affichée et l'état de charge $m_{Luft}$, génère un signal d'embrayage de l'accouplement (4) destiné à l'actionneur (5).

EP 0 612 915 B1